# EUROPEAN PATENT SPECIFICATION

(11) **EP 3 656 997 B1**
(45) Date of publication and mention of the grant of the patent: **06.04.2022**
(21) Application number: 19210618.5
(22) Date of filing: 21.11.2019
(51) Int. Cl.: F02C 3/113, F02K 3/06, B64D 27/02

(54) **HYBRID ELECTRIC PROPULSION WITH SUPERPOSITION GEARBOX**
HYBRIDER ELEKTROANTRIEB MIT ÜBERLAGERUNGSGETRIEBE
PROPULSION ÉLECTRIQUE HYBRIDE AVEC BOÎTE DE VITESSES À SUPERPOSITION

(30) Priority: 21.11.2018 US 201816197605
(43) Date of publication of application: 27.05.2020
(73) Proprietor: Raytheon Technologies Corporation, Farmington, CT 06032 (US)
(72) Inventor: LEQUE, Nicholas D., Vernon, CT 06066 (US); MCCUNE, Michael E., Colchester, CT 06415 (US); POLLY, Joseph H., Tolland, CT 06084 (US)
(74) Representative: Dehns

(56) References cited:
- EP-A1- 3 199 791
- EP-A1- 3 569 845
- WO-A1-2019/243558
- US-A1- 2014 290 265

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

A gas turbine engine is sized to provide sufficient thrust for takeoff and to climb to a cruising altitude. Once at cruise, only a fraction of the engines thrust capacity is required. Therefore, the majority of gas turbine engine operation occurs at less than maximum thrust conditions. Moreover, although alternate electric propulsion systems are available, the density of energy provided by batteries powering an electric motor is much less than that of fuel and therefore are not practical for most commercial aircraft applications.

Turbine engine manufacturers continue to seek further improvements to engine performance including improvements to thermal, transfer and propulsive efficiencies.

EP 3 199 791 A1 discloses a gas turbine engine according to the preamble of claim 1, and a method according to the preamble of claim 11.

US 2014/290265 A1 discloses a gas turbine engine with transmission, and EP 3 569 845 A1 discloses a hybrid electric fan with a stall free low pressure compressor. WO 2019/243558 A1, which is prior art under Art 54 (3) EPC, discloses a hybrid transmission turbojet engine.

### SUMMARY

In a first aspect, there is provided a gas turbine as set forth in claim 1.

According to a further aspect, there is provided a method as set forth in claim 11.

Embodiments of the disclosure are set forth in the dependent claims.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1A is a schematic view of an example gas turbine engine embodiment.
Figure 1B is a schematic view of another example gas turbine engine embodiment.
Figure 2 is a schematic representation of the example hybrid propulsion system.
Figure 3 is a schematic view of an example superposition gearbox embodiment.
Figure 4 is a schematic illustration of an example cycle of operation of the hybrid propulsion system.

### DETAILED DESCRIPTION

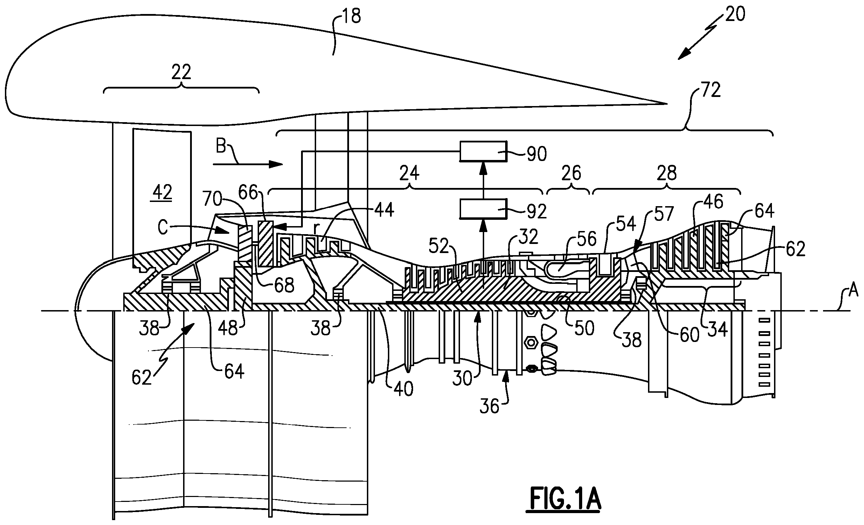

Figure 1A schematically illustrates a gas turbine engine 20. The gas turbine engine 20 is disclosed herein as a two-spool turbofan that generally incorporates a fan section 22 and a core engine 72. The core engine 72 includes a compressor section 24, a combustor section 26 and a turbine section 28. The fan section 22 drives air along a bypass flow path B in a bypass duct defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of engines including three-spool architectures, turbofan and turboprop engines as well as other aircraft propulsion systems that utilize petroleum based fuels.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to a fan section 22 through a speed change mechanism, which in exemplary gas turbine engine 20 is illustrated as a geared architecture 48 to drive fan blades 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and geared architecture 48 may be varied. For example, geared architecture 48 may be located aft of the low pressure compressor 44 and the fan blades 42 may be positioned forward or aft of the location of the geared architecture 48 or even aft of turbine section 28.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

The example gas turbine engine includes the fan section 22 that comprises in one non-limiting embodiment less than about 26 fan blades 42. In another non-limiting embodiment, the fan section 22 includes less than about 20 fan blades 42. Moreover, in one disclosed embodiment the low pressure turbine 46 includes no more than about 6 turbine rotors schematically indicated at 34. In another non-limiting example embodiment, the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and, therefore, the relationship between the number of turbine rotors 34 in the low pressure turbine 46 and the number of blades 42 in the fan section 22 disclose an example gas turbine engine 20 with increased power transfer efficiency.

The example engine 20 includes a hybrid propulsion system generally indicated at 62 having an electric motor 66 rotating a drive gear 70 that drives a portion of the geared architecture 48 in combination with the core engine 72 during high thrust demand conditions. The high thrust demand conditions include takeoff and landing operations where maximum thrust is utilized to gain altitude and maneuver the aircraft. Once the aircraft has attained a cruise altitude, the amount of thrust required is significantly less than the thrust required during takeoff. Accordingly, at cruise, the electric motor 66 is deactivated and the core engine 72 drives the fan section 22 through the geared architecture 48. The hybrid propulsion system 62 supplements power produced by the core engine 72 with power from the electric motor 66 to enable the core engine 72 to be of a reduced size and power capacity. The electric motor 66 supplements power from the core engine 72 during high thrust demand operation of an aircraft.

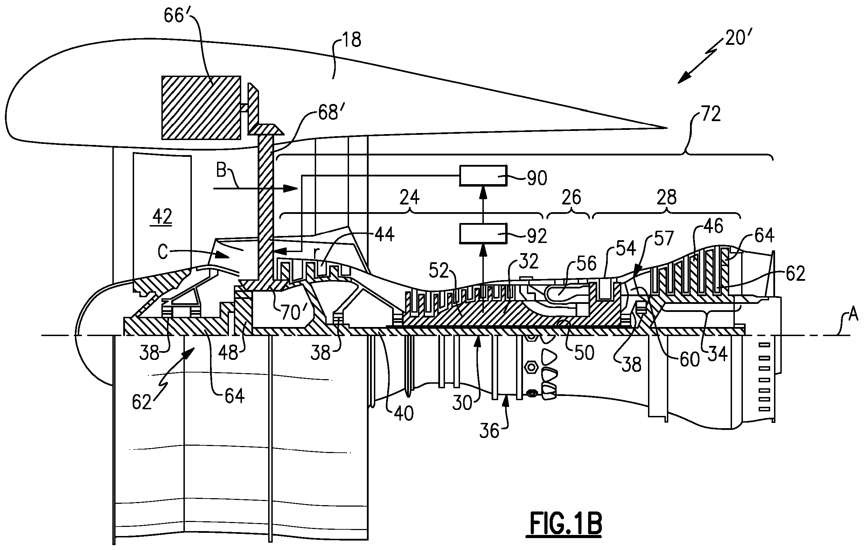

In the disclosed example embodiment of Figure 1A, the electric motor 66 drives a drive gear 70 through a shaft 68 that is parallel to the engine axis A. Referring to Figure 1B, another engine embodiment indicated at 20' includes a drive shaft 66' is disposed transverse to the engine axis A and drives a bevel drive gear 70' corresponding with a driven gear disposed on the geared architecture 48. Moreover, it should be understood, that although the example motor 66, 66' is shown in different orientations, other positions and orientations of the electric motor 66, 66' relative the geared architecture 48 are within the contemplation and scope of this disclosure.

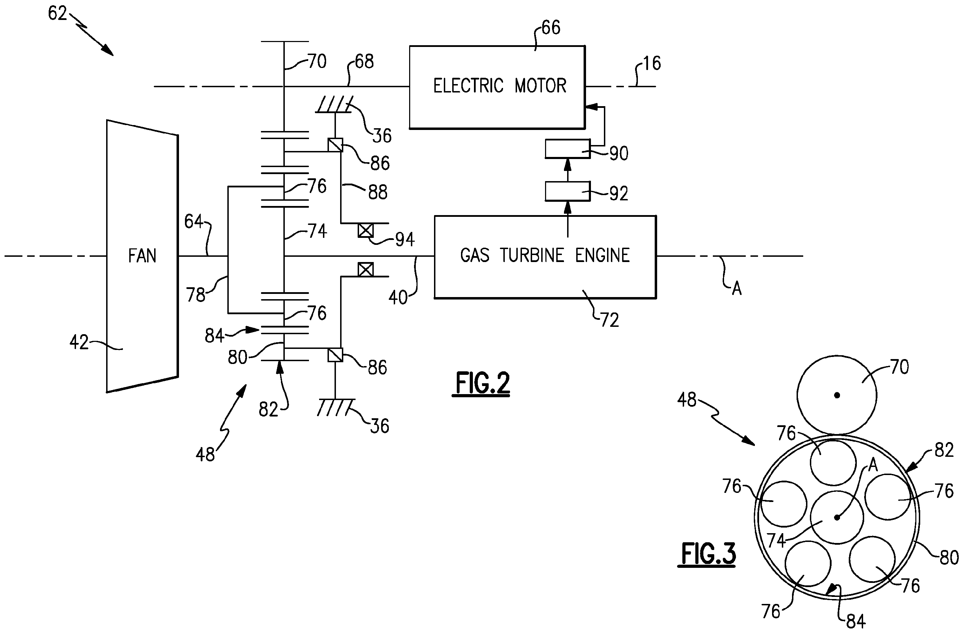

Referring to Figures 2 and 3, with continued reference to Figure 1, the geared architecture 48 is a superposition gearbox having a sun gear 74 coupled to the inner shaft 40 driven by the low pressure turbine 46. The sun gear 74 is engaged to a plurality of intermediate gears 76 supported by a rotating carrier 78. A ring gear 80 circumscribes the intermediate gears 76 and is engaged to the drive gear 70. The ring gear 80 is coupled to a ring gear shaft 88 shown schematically in Figure 2. The ring gear shaft 88 supported for rotation with the ring gear 80 by bearings 94.

The ring gear shaft 88 includes outer gear teeth 82 that engage gear teeth of a drive gear 70. Inner gear teeth 84 are engaged to the intermediate gears 76. The ring gear shaft 88 is selectively coupled to the engine static structure 36 through a coupling means. In one disclosed example, the coupling means is a one-way mechanical sprag clutch 86. Although a sprag clutch is disclosed by way of example, other one-way clutch configurations are within the contemplation and scope of this disclosure. The clutch 86 allows rotation of the drive gear 70 to rotate the ring gear 80. However, the clutch 86 prevents driving of the ring gear 80 by the intermediate gears 76 when the electric motor 66 is not operating. The example one-way mechanical clutch 86 automatically prevents back driving of the electric motor 66 through the drive gear 70 without an external actuator or controller.

The electric motor 66, drive shaft 68 and drive gear 70 are disposed along an axis 16 that is spaced apart from the engine longitudinal axis A. The electric motor 66 is thereby separately and independently rotatable relative to the inner shaft 40. Moreover, the electric motor 66, drive shaft 68 and drive gear 70 are rotatable at a speed different than the inner shaft 40 to provide supplemental power through the superposition gearbox 48.

The drive gear 70 is sized to drive the ring gear 80 at a speed determined to provide the supplemental power required to generate a desired amount of propulsive thrust. Accordingly, a gear ratio between the drive gear 70 and the ring gear 80 is such that the electric motor 66 is able to provide the supplemental input power required to generate the propulsive thrust from the fan section required for aircraft operation.

The electric motor 66 is powered by electric energy stored in a battery system schematically shown at 90. The battery system 90 may include any known power storage means and system. The battery system 90 is disclosed as coupled to a generator means 92 powered by the core engine 72. The generator means 92 charges the battery system 90 to maintain a desired level of power to drive the electric motor 66. The generator 92 may continually charge the battery system 90 or be engaged to charge the battery systems 90 during minimal thrust requirement operating conditions. The generator 92 maybe decoupled during high thrust demand conditions to enable the core engine 72 to concentrate all power on generating propulsive thrust. During low thrust demand operating conditions, the generator 92 may be powered by the core engine 72 to charge the battery system 90. It should be appreciated, that other charging schemes and means could also be utilized and are within the contemplation of this disclosure.

In operation at high thrust demand conditions such as during takeoff, both the electric motor 66 and the core engine 72 provide power input into the superposition gearbox 48. The core engine 72 drives the sun gear 74 through the inner shaft 40. The sun gear 74 in turn drives the intermediate gears 76 that rotate the carrier 78 coupled to the fan shaft 46. The electric motor 66 drives the ring gear 80 to further drive the rotation of the carrier 78 and provide the power required to drive the fan 42 to generate the desired propulsive thrust.

In operation during low thrust demand conditions, the core engine 72 drives the sun gear 74 and thereby the intermediate gears 76 and carrier 78. The carrier 78 drives the fan shaft 64 and fan 42. The electric motor 66 is deactivated and the clutch 86 engaged to prevent rotation of the ring gear 80 about the axis A. The superposition gearbox 48 is therefore powered only by the core engine 72. The core engine 72 may drive the generator 92 to charge the battery system 90 to maintain power levels needed to drive the electric motor during high thrust demand conditions.

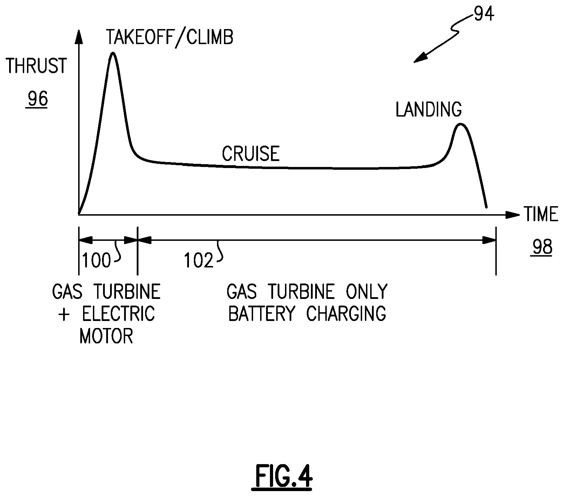

Referring to Figure 4, with continued reference to Figures 2 and 3, a graph illustrating thrust demands over disclosed aircraft operation cycle is indicated at 94. Thrust 96 in view of time 98 is illustrated for different operating conditions. The greatest thrust requirement is during takeoff and climb operating conditions indicated at 100. During the high thrust demand operating conditions, the electric motor 66 is actuated and supplements power provided by the core engine 72. The electric motor 66 maintains operation until the thrust demand drops as is shown in this disclosed example during cruise conditions indicated at 102. During cruise conditions 102, the core engine 72 operates alone to provide power to generate the required thrust. Because the thrust requirements at cruise conditions 102 are lower than peak thrust conditions, the electric motor 66 is not needed to supplement power. Moreover, the disclosed core engine 72 is sized to provide sufficient power required to generate the thrust needed during cruise conditions 102. The core engine 72 is therefore of a reduced size and thrust capacity that enables the core engine 72 to be sized and configured to operate more efficiently at cruise conditions.

As appreciated, most of the operating time during each operation cycle is at the lower thrust cruise operating conditions. Accordingly, the core engine 72 may be sized to provide only sufficient power to provide thrust during cruise conditions. The electric motor 66 is engaged to supplement power during higher thrust demand conditions.

During landing operating conditions, the electric motor 66 can be reengaged to supplement power from the core engine 72. The electric motor 66 can vary the power input into the superposition gearbox 48 to accommodate differing thrust demands. It should be further understood, that the electric motor 66 could be reengaged during other operational periods in response to a demand for thrust exceeding the power capacity of the core engine 72.

Accordingly, the disclosed hybrid propulsion system 62 enables reduce core engine size while maintaining available power to accommodate high thrust demand operation.

Although an example embodiment has been disclosed, a worker of ordinary skill in this art would recognize that this disclosure is not just a material specification and that certain modifications would come within the scope of this disclosure. For that reason, the following claims should be studied to determine the scope and content of this disclosure.

## Claims

1. A gas turbine engine (20) comprising:
a core engine (72);
a fan section (22);
a gearbox (48) wherein an output from the gearbox (48) drives the fan section (22); and
an electric motor (66) coupled to a portion of the gearbox (48) to provide a portion of power to drive the fan section (22) through the gearbox (48), **characterised in that**:
the gearbox (48) is a superposition gearbox (48) including a sun gear (74), a plurality of intermediate gears (76) engaged to the sun gear (74) and supported in a carrier (78) and a ring gear (80) circumscribing the intermediate gears (76), the core engine (72) driving the sun gear (74); and
the gas turbine engine further comprises a one-way clutch (86) configured to automatically couple the ring gear (80) to a static structure (36) of the gas turbine engine (20) when the electric motor (66) is not actuated, wherein the one-way clutch (86) comprises a one-way mechanical sprag clutch (86).

2. The gas turbine engine as recited in claim 1, wherein the ring gear (80) includes inner gear teeth (84) engaged to the intermediate gears (76) and outer gear teeth (82) engaged to a drive gear (70) driven by the electric motor (66).

3. The gas turbine engine as recited in claim 2, wherein the drive gear (70) is supported on a drive shaft (68) driven by the electric motor (66) and the drive shaft (68) is separate and independent of a core engine shaft (40) driving the sun gear (74).

4. The gas turbine engine as recited in any preceding claim, wherein the fan section (22) includes a shaft (64) driven by the carrier (78) of the superposition gearbox (48).

5. The gas turbine engine as recited in any preceding claim, wherein the electric motor (66) is coupled to a battery system (90) and the core engine (72) drives a generator (92) for charging the battery system (90).

6. The gas turbine engine as recited in any preceding claim, wherein a sea level takeoff thrust is provided by power generated by the core engine (72) and the electric motor (66)

7. The gas turbine engine as recited in claim 6, wherein the core engine (72) includes a maximum thrust capacity that is less than the sea level takeoff thrust.

8. The gas turbine engine as recited in any preceding claim, configured such that the electric motor (66) is deactivated such that only the core engine (72) provides thrust at a cruise operating condition.

9. The gas turbine engine (20) of any preceding claim, wherein:
the core engine (72) includes a compressor section (24) configured to communicate compressed air to a combustor section (26) configured to combine the compressed air with fuel and ignite the combined air and fuel to generate a high energy gas flow for driving a turbine section (28), the turbine section (28) configured to drive a turbine shaft (40) disposed along an engine longitudinal axis (A);
the fan section (22) is configured to generate a propulsive thrust, the fan section (22) including a or the shaft (64); and
the turbine shaft (40) is configured to drive the sun gear (74) and an output from the superposition gearbox (48) is configured to drive the fan section shaft (64).

10. The gas turbine engine as recited in claim 9, wherein a or the drive gear (70) driven by the electric motor (66) is independent of the turbine shaft (40) and separately rotatable at a speed different than the turbine shaft (40).

11. A method of operating a gas turbine engine (20) comprising:
coupling a core engine (72) to a first portion of a gearbox (48); and
coupling an electric motor (66) to a second portion of the gearbox (48), **characterised in that**:
the gearbox (48) is a superposition gearbox (48);
the first portion of the superposition gearbox (48) comprises a sun gear (74) engaged to drive a plurality of intermediate gears (76) and the second portion comprises a ring gear (80) circumscribing the intermediate gears (76); and
the method further comprises:
driving a fan (42) through the superposition gearbox (48) with power from both the core engine (72) and the electric motor (66) to generate a takeoff thrust;
driving the fan (42) through the superposition gearbox (48) with power from only the core engine (72) during a cruise operating condition; and
coupling the ring gear (80) to a static structure (36) of the gas turbine engine (20) responsive to the electric motor (66) not driving the ring gear (80), wherein the gas turbine engine further comprises a one-way clutch (86) configured to automatically couple the ring gear (80) to the static structure (36) of the gas turbine engine (20) when the electric motor (66) is not actuated, and the one-way clutch (86) comprises a one-way mechanical sprag clutch (86).

12. The method as recited in claim 11, including actuating the electric motor (66) to drive the ring gear (80) and provide supplemental power in response to a desired engine thrust exceeding a thrust generating capacity of the core engine (72) alone.

13. The method as recited in claim 11 or 12, including charging a battery system (90) providing power to the electric motor (66) with the core engine (72) during the cruise operating condition.

## Patentansprüche

1. Gasturbinentriebwerk (20), umfassend:
ein Kerntriebwerk (72);
einen Fan-Abschnitt (22);
ein Getriebe (48), wobei ein Abtrieb von dem Getriebe (48) den Fan-Abschnitt (22) antreibt; und
einen Elektromotor (66), der mit einem Abschnitt des Getriebes (48) gekoppelt ist, um einen Teil der Leistung bereitzustellen, um den Fan-Abschnitt (22) über das Getriebe (48) anzutreiben, **dadurch gekennzeichnet, dass**:
das Getriebe (48) ein Überlagerungsgetriebe (48) ist, das ein Sonnenrad (74), eine Vielzahl von Zwischenrädern (76), die mit dem Sonnenrad (74) in Eingriff stehen und in einem Träger (78) gelagert sind, und ein Hohlrad (80), das die Zwischenräder (76) umgibt, beinhaltet, wobei das Kerntriebwerk (72) das Sonnenrad (74) antreibt; und
das Gasturbinentriebwerk ferner eine Freilaufkupplung (86) umfasst, die so konfiguriert ist, dass sie das Hohlrad (80) automatisch mit einer statischen Struktur (36) des Gasturbinentriebwerks (20) koppelt, wenn der Elektromotor (66) nicht in Betrieb gesetzt ist, wobei die Freilaufkupplung (86) eine mechanische Freilauf-Überholkupplung (86) umfasst.

2. Gasturbinentriebwerk nach Anspruch 1, wobei das Hohlrad (80) innere Zahnradzähne (84), die mit den Zwischenrädern (76) in Eingriff stehen, und äußere Zahnradzähne (82), die mit einem Antriebsrad (70), das von dem Elektromotor (66) angetrieben wird, in Eingriff stehen, umfasst.

3. Gasturbinentriebwerk nach Anspruch 2, wobei das Antriebsrad (70) an einer Antriebswelle (68), die von dem Elektromotor (66) angetrieben wird, gestützt wird, und die Antriebswelle (68) von einer Kerntriebwerkwelle (40), die das Sonnenrad (74) antreibt, getrennt und unabhängig ist.

4. Gasturbinentriebwerk nach einem der vorstehenden Ansprüche, wobei der Fan-Abschnitt (22) eine Welle (64) beinhaltet, die von dem Träger (78) des Überlagerungsgetriebes (48) angetrieben wird.

5. Gasturbinentriebwerk nach einem der vorstehenden Ansprüche, wobei der Elektromotor (66) mit einem Batteriesystem (90) gekoppelt ist und das Kerntriebwerk (72) einen Generator (92) zum Laden des Batteriesystems (90) antreibt.

6. Gasturbinentriebwerk nach einem der vorstehenden Ansprüche, wobei ein Startschub in Meereshöhe durch die Leistung, die von dem Kerntriebwerk (72) und dem Elektromotor (66) erzeugt wird, bereitgestellt wird

7. Gasturbinentriebwerk nach Anspruch 6, wobei das Kerntriebwerk (72) ein Höchstschubvermögen beinhaltet, das geringer als der Startschub in Meereshöhe ist.

8. Gasturbinentriebwerk nach einem der vorstehenden Ansprüche, das so konfiguriert ist, dass der Elektromotor (66) so deaktiviert wird, dass in einem Reiseflugbetriebszustand nur das Kerntriebwerk (72) Schub bereitstellt.

9. Gasturbinentriebwerk (20) nach einem der vorstehenden Ansprüche, wobei:
das Kerntriebwerk (72) einen Verdichterabschnitt (24) beinhaltet, der so konfiguriert ist, dass er verdichtete Luft zu einem Brennkammerabschnitt (26) leitet, der so konfiguriert ist, dass er die verdichtete Luft mit Treibstoff mischt und das Luft- und Treibstoffgemisch entzündet, um einen energiereichen Gasstrom zum Antreiben eines Turbinenabschnitts (28) zu erzeugen, wobei der Turbinenabschnitt (28) so konfiguriert ist, dass er eine Turbinenwelle (40) antreibt, die entlang einer Triebwerkslängsachse (A) angeordnet ist;
der Fan-Abschnitt (22) so konfiguriert ist, dass er einen Vortriebsschub erzeugt, wobei der Fan-Abschnitt (22) eine oder die Welle (64) beinhaltet; und
die Turbinenwelle (40) so konfiguriert ist, dass sie das Sonnenrad (74) antreibt, und ein Abtrieb vom Überlagerungsgetriebe (48) so konfiguriert ist, dass er die Fan-Abschnittswelle (64) antreibt.

10. Gasturbinentriebwerk nach Anspruch 9, wobei ein oder das Antriebsrad (70), das von dem Elektromotor (66) angetrieben wird, von der Turbinenwelle (40) unabhängig ist und getrennt mit einer anderen Drehzahl als die Turbinenwelle (40) drehbar ist.

11. Verfahren zum Betreiben eines Gasturbinentriebwerks (20), Folgendes umfassend:
Koppeln eines Kerntriebwerks (72) mit einem ersten Abschnitt eines Getriebes (48); und
Koppeln eines Elektromotors (66) mit einem zweiten Abschnitt des Getriebes (48), **dadurch gekennzeichnet, dass**:
das Getriebe (48) ein Überlagerungsgetriebe (48) ist;
der erste Abschnitt des Überlagerungsgetriebes (48) ein Sonnenrad (74) umfasst, das so im Eingriff steht, dass es eine Vielzahl von Zwischenrädern (76) antreibt, und der zweite Abschnitt ein Hohlrad (80) umfasst, das die Zwischenräder (76) umgibt; und
wobei das Verfahren ferner Folgendes umfasst:
Antreiben eines Fans (42) über das Überlagerungsgetriebe (48) mit Leistung sowohl vom Kerntriebwerk (72) als auch vom Elektromotor (66), um einen Startschub zu erzeugen;
Antreiben des Fans (42) über das Überlagerungsgetriebe (48) mit Leistung nur vom Kerntriebwerk (72) während eines Reiseflugbetriebszustands; und
Koppeln des Hohlrads (80) mit einer statischen Struktur (36) des Gasturbinentriebwerks (20) als Reaktion darauf, dass der Elektromotor (66) das Hohlrad (80) nicht antreibt, wobei das Gasturbinentriebwerk ferner eine Freilaufkupplung (86) umfasst, die so konfiguriert ist, dass sie das Hohlrad (80) automatisch mit der statischen Struktur (36) des Gasturbinentriebwerks (20) koppelt, wenn der Elektromotor (66) nicht in Betrieb ist, und die Freilaufkupplung (86) eine mechanische Freilauf-Überholkupplung (86) umfasst.

12. Verfahren nach Anspruch 11, das Betätigen des Elektromotors (66), um das Hohlrad (80) anzutreiben und zusätzliche Leistung bereitzustellen, als Reaktion darauf, dass ein erwünschter Triebwerksschub ein Schuberzeugungsvermögen des Kerntriebwerks (72) alleine überschreitet, beinhaltend.

13. Verfahren nach Anspruch 11 oder 12, das Laden eines Batteriesystems (90), das dem Elektromotor (66) Leistung bereitstellt, mit dem Kerntriebwerk (72) während des Reiseflugbetriebszustands beinhaltend.

## Revendications

1. Moteur à turbine à gaz (20) comprenant :
un moteur central (72) ;
une section de soufflante (22) ;
une boîte de vitesses (48), dans lequel une sortie de la boîte de vitesses (48) entraîne la section de soufflante (22) ; et
un moteur électrique (66) couplé à une partie de la boîte de vitesses (48) pour fournir une partie de puissance pour entraîner la section de soufflante (22) à travers la boîte de vitesses (48), **caractérisé en ce que** :
la boîte de vitesses (48) est une boîte de vitesses à superposition (48) comportant une roue solaire (74), une pluralité d'engrenages intermédiaires (76) en prise avec la roue solaire (74) et supportés dans un support (78) et une couronne dentée (80) circonscrivant les engrenages intermédiaires (76), le moteur central (72) entraînant la roue solaire (74) ; et
le moteur à turbine à gaz comprend en outre un embrayage unidirectionnel (86) conçu pour coupler automatiquement la couronne dentée (80) à une structure statique (36) du moteur à turbine à gaz (20) lorsque le moteur électrique (66) n'est pas actionné, dans lequel l'embrayage unidirectionnel (86) comprend un embrayage mécanique unidirectionnel à roue libre (86).

2. Moteur à turbine à gaz selon la revendication 1, dans lequel la couronne dentée (80) comporte des dents d'engrenage intérieures (84) en prise avec les engrenages intermédiaires (76) et des dents d'engrenage extérieures (82) en prise avec un engrenage d'entraînement (70) entraîné par le moteur électrique (66).

3. Moteur à turbine à gaz selon la revendication 2, dans lequel l'engrenage d'entraînement (70) est supporté sur un arbre d'entraînement (68) entraîné par le moteur électrique (66) et l'arbre d'entraînement (68) est séparé et indépendant d'un arbre de moteur central (40) entraînant la roue solaire (74).

4. Moteur à turbine à gaz selon une quelconque revendication précédente, dans lequel la section de soufflante (22) comporte un arbre (64) entraîné par le support (78) de la boîte de vitesses à superposition (48).

5. Moteur à turbine à gaz selon une quelconque revendication précédente, dans lequel le moteur électrique (66) est couplé à un système de batterie (90) et le moteur central (72) entraîne un générateur (92) pour charger le système de batterie (90).

6. Moteur à turbine à gaz selon une quelconque revendication précédente, dans lequel une poussée de décollage au niveau de la mer est fournie par la puissance générée par le moteur central (72) et le moteur électrique (66)

7. Moteur à turbine à gaz selon la revendication 6, dans lequel le moteur central (72) comporte une capacité de poussée maximale qui est inférieure à la poussée de décollage au niveau de la mer.

8. Moteur à turbine à gaz selon une quelconque revendication précédente, conçu de sorte que le moteur électrique (66) est désactivé de sorte que seul le moteur central (72) fournit une poussée dans une condition de fonctionnement de croisière.

9. Moteur à turbine à gaz (20) selon une quelconque revendication précédente, dans lequel :
le moteur central (72) comporte une section de compresseur (24) conçue pour communiquer de l'air comprimé à une section de chambre de combustion (26) conçue pour combiner l'air comprimé avec du carburant et enflammer l'air et le carburant combinés pour générer un flux de gaz à haute énergie pour entraîner une section de turbine (28), la section de turbine (28) étant conçue pour entraîner un arbre de turbine (40) disposé le long d'un axe longitudinal de moteur (A) ;
la section de soufflante (22) est conçue pour générer une poussée de propulsion, la section de soufflante (22) comportant un ou l'arbre (64) ; et
l'arbre de turbine (40) est conçu pour entraîner la roue solaire (74) et une sortie de la boîte de vitesses à superposition (48) est conçue pour entraîner l'arbre de section de soufflante (64).

10. Moteur à turbine à gaz selon la revendication 9, dans lequel un ou l'engrenage d'entraînement (70) entraîné par le moteur électrique (66) est indépendant de l'arbre de turbine (40) et peut tourner séparément à une vitesse différente de celle de l'arbre de turbine (40).

11. Procédé de fonctionnement d'un moteur à turbine à gaz (20) comprenant :
le couplage d'un moteur central (72) à une première partie d'une boîte de vitesses (48) ; et
le couplage d'un moteur électrique (66) à une seconde partie de la boîte de vitesses (48), **caractérisé en ce que** :
la boîte de vitesses (48) est une boîte de vitesses à superposition (48) ;
la première partie de la boîte de vitesses à superposition (48) comprend une roue solaire (74) en prise pour entraîner une pluralité d'engrenages intermédiaires (76) et la seconde partie comprend une couronne dentée (80) circonscrivant les engrenages intermédiaires (76) ; et
le procédé comprend en outre :
l'entraînement d'une soufflante (42) à travers la boîte de vitesses à superposition (48) avec la puissance à la fois du moteur central (72) et du moteur électrique (66) pour générer une poussée de décollage ;
l'entraînement de la soufflante (42) à travers la boîte de vitesses à superposition (48) avec la puissance provenant uniquement du moteur central (72) pendant une condition de fonctionnement en croisière ; et
le couplage de la couronne dentée (80) à une structure statique (36) du moteur à turbine à gaz (20) en réponse au fait que le moteur électrique (66) n'entraîne pas la couronne dentée (80), dans lequel le moteur à turbine à gaz comprend en outre un embrayage unidirectionnel (86) conçu pour coupler automatiquement la couronne dentée (80) à la structure statique (36) du moteur à turbine à gaz (20) lorsque le moteur électrique (66) n'est pas actionné, et l'embrayage unidirectionnel (86) comprend un embrayage mécanique unidirectionnel à roue libre (86).

12. Procédé selon la revendication 11, comportant l'actionnement du moteur électrique (66) pour entraîner la couronne dentée (80) et fournir une puissance supplémentaire en réponse à une poussée de moteur souhaitée dépassant une capacité de génération de poussée du moteur central (72) seul.

13. Procédé selon la revendication 11 ou 12, comportant la charge d'un système de batterie (90) fournissant de l'énergie au moteur électrique (66) avec le moteur central (72) pendant la condition de fonctionnement de croisière.
